# FASCICULE DE BREVET EUROPEEN

(11) **EP 2 474 000 B1**
(45) Date de publication et mention de la délivrance du brevet: **08.05.2013**
(21) Numéro de dépôt: 10749855.2
(22) Date de dépôt: 01.09.2010
(51) Int. Cl.: G21C 3/62, G21C 19/46

(54) **PROCEDE DE PREPARATION D'UN COMBUSTIBLE NUCLEAIRE POREUX A BASE D'AU MOINS UN ACTINIDE MINEUR**
VERFAHREN ZUR HERSTELLUNG VON PORÖSEM KERNBRENNSTOFF AUF DER BASIS DER WENIGER HÄUFIGEN AKTINIDEN
PROCESS FOR THE PRODUCTION OF POROUS NUCLEAR FUEL ON THE BASIS OF AT LEAST ONE MINOR ACTINIDE

(30) Priorité: 02.09.2009 FR 0955985
(43) Date de publication de la demande: 11.07.2012
(73) Titulaire: Commissariat à l'Énergie Atomique et aux Énergies Alternatives, 75015 Paris (FR)
(72) Inventeur: JANKOWIAK, Aurélien, 91470 Limours en Hurepoix (FR); HERLET, Nathalie, F-30200 Saint Laurent de Carnols (FR); LEORIER, Caroline, F-30133 Les Angles (FR); ASTIER, Nicolas, F-30130 Pont Saint Esprit (FR); COSTE, Philippe, F-30130 Saint Paulet de Caisson (FR); DESCHAMPS, Barbara, F-84840 Lapalud (FR); PRIEUR, Damien, F-30150 Roquemaure (FR); BLANCHART, Philippe, F-87100 Limoges (FR)
(74) Mandataire: Ilgart, Jean-Christophe
(86) Numéro de dépôt international: PCT/EP2010/062806
(87) Numéro de publication internationale: WO 2011/026862

(56) Documents cités:
- FR-A1- 2 909 479
- GB-A- 1 599 857
- US-B1- 6 251 309

## Description

### DOMAINE TECHNIQUE

L'invention a trait à un procédé de préparation d'un combustible nucléaire poreux comprenant de l'uranium, éventuellement du plutonium et au moins un actinide mineur mettant en oeuvre des étapes faisant intervenir des poudres de ces éléments.

Ce procédé peut trouver, en particulier, son application dans le recyclage d'actinides mineurs via l'incorporation de ces actinides mineurs dans le combustible susmentionné, lequel est destiné à être utilisé pour constituer des crayons nucléaires pour réacteur nucléaire ou encore, à entrer dans la constitution de cibles de transmutation, en vue d'effectuer des expériences de transmutation nucléaire notamment pour mieux comprendre le mécanisme de transmutation de ces éléments actinides mineurs.

On précise, pour la suite de l'exposé, que par actinide mineur, on entend les éléments actinides autres que l'uranium, le plutonium et le thorium, formés dans les réacteurs par captures successives de neutrons par les noyaux de combustible standard, les actinides mineurs étant l'américium, le curium et le neptunium.

### ÉTAT DE LA TECHNIQUE ANTÉRIEURE

A l'heure actuelle, le recyclage des actinides mineurs issus du traitement des combustibles usés s'opère par deux voies distinctes connues sous les appellations suivantes :
- le recyclage hétérogène ; et
- le recyclage homogène.

Dans le cas du recyclage hétérogène, les actinides mineurs sont séparés, lors du traitement du combustible usé, de l'uranium et du plutonium, et sont ensuite incorporés, à une teneur élevée, dans des éléments de combustible comprenant une matrice non fissile distincts des éléments de combustible standard du réacteur. Les éléments de combustible comprenant les actinides mineurs peuvent consister, par exemple, en des éléments de couverture disposés en périphérie du coeur d'un réacteur. Cette voie de recyclage permet, notamment, d'éviter de dégrader les caractéristiques du combustible standard par une incorporation d'actinides mineurs en concentrant les problèmes générés par ces actinides sur un flux de matière réduit.

Dans le cas du recyclage homogène, les actinides mineurs sont mélangés, à une faible teneur, et sont répartis de façon quasi uniforme dans la totalité des éléments de combustible standard de réacteur. Pour ce faire, lors du traitement du combustible usé, l'uranium, le plutonium et les actinides mineurs sont traités ensemble pour former des oxydes, lesquels sont ensuite utilisés dans la fabrication desdits combustibles.

L'introduction d'actinides mineurs dans des combustibles destinés au coeur de réacteur se traduit par une émission importante, au sein de ces combustibles, de gaz de fission et par une forte émission α. Pour des raisons de sécurité, il faut donc prévoir des combustibles présentant une microstructure comportant un niveau de porosité stable sous irradiation, qui permet, qui plus est, l'évacuation des gaz de fission et de l'hélium de décroissance sans dégradation physique du combustible. Le taux de porosité recommandé pour de tels combustibles doit être de l'ordre de 14 à 16 %, de même que la porosité doit être une porosité ouverte.

Pour essayer d'approcher voire d'atteindre un tel taux, il est connu d'incorporer dans le combustible des quantités importantes d'agents porogènes organiques pendant l'étape de mélange/broyage des oxydes susmentionnés. Toutefois, la tenue dans le temps des agents porogènes organiques n'est pas assurée compte tenu du niveau élevé d'émission α générée par la présence des actinides mineurs. En effet, les agents porogènes utilisés actuellement (tels que l'azodicarbonamide) perdent très rapidement leurs propriétés, ce qui peut générer un important taux de rebut difficilement gérable du fait de la présence des actinides mineurs. Il en résulte une impossibilité de stocker les mélanges destinés à constituer les combustibles et, du fait de la dégradation des agents porogènes, un risque de gonflement des pastilles du combustible avant frittage destinées à entrer dans la constitution du combustible. Il s'ensuit, de ce fait, une impossibilité d'obtenir des combustibles présentant une porosité contrôlée.

Ainsi, au vu des procédés de l'art antérieur concernant la fabrication de combustible comprenant des actinides mineurs, les inventeurs se sont fixé comme objectif de mettre au point un procédé ne présentant pas les inconvénients inhérents à l'utilisation des agents porogènes organiques, à savoir la dégradation de ces agents dès le stade du mélange des précurseurs du combustible et donc une impossibilité d'obtenir une porosité contrôlée du combustible.

### EXPOSÉ DE L'INVENTION

Pour résoudre cette problématique, les inventeurs proposent un procédé inventif permettant de se passer de l'utilisation d'agents porogénes organiques pour obtenir un combustible nucléaire poreux à base d'actinides mineurs.

L'invention a ainsi trait à un procédé de fabrication d'un combustible poreux comprenant de l'uranium, éventuellement du plutonium, et au moins un actinide mineur comprenant successivement les étapes suivantes :
a) une étape de compactage sous forme de pastilles d'un mélange de poudres comprenant de l'oxyde d'uranium, éventuellement de l'oxyde de plutonium, et au moins un oxyde d'un actinide mineur, une partie au moins de l'oxyde d'uranium étant sous forme d'octaoxyde de triuranium U₃O₈, l'autre partie étant sous forme de dioxyde d'uranium UO₂ ;
b) une étape de réduction d'au moins une partie de l'octaoxyde de triuranium U₃O₈ en dioxyde d'uranium UO₂.

Ce procédé est innovant, entre autres, par le fait, que la porosité est générée par la réduction de l' octaoxyde de triuranium U₃O₈ en dioxyde d'uranium UO₂. En effet, la réduction de l'octaoxyde de triuranium U₃O₈ en dioxyde d'uranium UO₂ génère une réduction de volume de l'espace occupé par l'octaoxyde de triuranium d'environ 30%, l'espace laissé ainsi vacant constituant des pores dans le combustible. En réglant la quantité d'octaoxyde de triuranium U₃O₈ dans le mélange de départ et le taux de réduction, il est ainsi possible aisément de viser un taux précis de porosité du combustible et d'accéder ainsi à un procédé permettant de contrôler le taux de porosité du combustible produit.

Qui plus est, du fait de l'absence d'utilisation d'agents porogènes organiques, les difficultés liées au stockage des mélanges précurseurs du combustible ou des pastilles de combustible avant frittage sont moindres. Le procédé de l'invention s'avère donc plus flexible que les procédés de l'art antérieur mettant en oeuvre des agents porogènes organiques, car les différentes étapes le constituant peuvent être réalisées de façon extemporanée.

Enfin, ce procédé permet d'envisager une incorporation de tous les actinides mineurs (américium, curium et neptunium) issus des flux de retraitement des combustibles usés.

L'oxyde d'un actinide mineur peut être de l'oxyde d'américium, tel que AmO₂, Am₂O₃, de l'oxyde de curium, tel que CmO₂, Cm₂O₃, de l'oxyde de neptunium, tel que NpO₂ et des mélanges de ceux-ci.

L'oxyde de plutonium peut se présenter sous forme de PuO₂ et/ou Pu₂O₃.

Dans le mélange de poudres susmentionné, l'oxyde d'uranium sous forme d'octaoxyde de triuranium U₃O₈ peut se trouver associé au sein des mêmes grains avec un oxyde d'un actinide mineur et éventuellement de l'oxyde de plutonium, lesdits grains présentant avantageusement une taille de grains supérieure à 100 µm, de préférence allant de 100 à 250 µm. Ceci n'exclut pas le fait que l'oxyde d'un actinide mineur et l'oxyde de plutonium puissent également exister sous forme de grains distincts.

On précise que, dans ce qui précède et ce suit, on entend par grain ou poudre présentant une taille de grains supérieure à 100 µm, une poudre qui, déposée sur un tamis présentant des mailles carrées de 100 µm de côté, ne traversera pas ledit tamis.

On précise que, dans ce qui précède et ce qui suit, on entend par grain ou poudre présentant une taille de grains allant de 100 à 250 µm, une poudre pouvant être sélectionnée par les opérations de tamisage suivantes :
- une première opération de tamisage sur un tamis présentant des mailles carrées de 100 µm de côté permettant d'isoler la fraction granulométrique ne traversant pas ledit tamis, c'est-à-dire la poudre présentant une taille de grains supérieure à 100 µm ;
- une seconde opération de tamisage consistant à faire passer ladite poudre présentant une taille de grains supérieure à 100 µm issue de la première opération de tamisage, sur un tamis présentant des mailles carrées de 250 µm de côté, la fraction granulométrique ayant traversé le tamis constituant la poudre présentant une taille de grains allant de 100 à 250 µm.

Préalablement à l'étape de compactage a), le procédé de l'invention peut comprendre une étape de préparation du mélange de poudres susmentionné dans l'étape a).

L'étape de préparation du mélange peut, selon l'invention, être réalisée selon plusieurs variantes.

Selon une première variante, l'étape de préparation du mélange de poudres tel que défini à l'étape a) peut consister à mettre en contact un premier mélange comprenant une poudre d'oxyde d'uranium sous forme de dioxyde d'uranium UO₂, éventuellement une poudre d'oxyde de plutonium, et au moins une poudre d'un oxyde d'un actinide mineur et un deuxième mélange de poudres comprenant de l'oxyde d'uranium sous forme d'octaoxyde de triuranium U₃O₈, éventuellement de l'oxyde de plutonium et un oxyde d'un actinide mineur, le deuxième mélange de poudres se présentant avantageusement sous forme de grains comprenant l'association au sein d'un même grain de l'oxyde d'uranium sous forme d'octaoxyde de triuranium U₃O₈, éventuellement de l'oxyde de plutonium, et d'un oxyde d'un actinide mineur, lesdits grains présentant avantageusement une taille de grains supérieure à 100 µm, de préférence allant de 100 à 250 µm.

Le premier mélange peut être issu des opérations suivantes :
- une opération de mise en contact d'une poudre d'oxyde d'uranium sous forme de dioxyde d'uranium UO₂, éventuellement d'une poudre d'oxyde de plutonium, et d'au moins une poudre d'un oxyde d'un actinide mineur ; et
- éventuellement, une opération de co-broyage du mélange résultant pour obtenir un mélange de poudres intime.

Le deuxième mélange peut être issu des opérations successives suivantes :
- une opération de mise en contact d'une poudre d'oxyde d'uranium sous forme d'octaoxyde de triuranium U₃O₈, éventuellement d'une poudre d'oxyde de plutonium, et d'au moins une poudre d'oxyde d'un actinide mineur ;
- une opération de co-broyage desdites poudres ;
- une opération de pressage à une pression P1 prédéterminée ;
- une opération de concassage ; et
- au moins une opération de tamisage de sorte à isoler les grains présentant une taille de grains supérieure à 100 µm, de préférence allant de 100 à 250 µm.

Selon une deuxième variante, l'étape de préparation peut consister à mettre en contact une première poudre coprécipitée d'oxyde d'uranium, éventuellement de plutonium, et d'un actinide mineur avec un deuxième mélange de poudres comprenant de l'oxyde d'uranium sous forme d'octaoxyde de triuranium U₃O₈, éventuellement de l'oxyde de plutonium et au moins un oxyde d'un actinide mineur.

Ces poudres peuvent être issues de la coprécipitation oxalique d'un flux comprenant les éléments chimiques concernés.

Cette deuxième variante permet d'envisager d'utiliser directement les flux de retraitement comprenant les éléments chimiques adéquats en vue de fabriquer le combustible de l'invention.

Le deuxième mélange de poudres de la seconde variante (c'est-à-dire celui comprenant, entre autres, de l'oxyde d'uranium sous forme d'octaoxyde de triuranium U₃O₈) peut être obtenu à partir d'une fraction de la première poudre coprécipitée, laquelle fraction est soumise à une étape de calcination sous air, de sorte à transformer l'oxyde d'uranium UO₂ en octaoxyde de triuranium U₃O₈, le produit résultant étant ensuite éventuellement soumis à une opération de pressage, suivie d'une opération de concassage et d'une opération de tamisage de sorte à isoler les poudres présentant une taille de grains supérieure à 100 µm, de préférence allant de 100 à 250 µm.

D'un point de vue concret, lors de l'opération de calcination, l'U₃O₈ formé se dissocie pour former des grains distincts d'octaoxyde de triuranium, la forme orthorombique de l'U₃O₈ étant incompatible avec la forme cubique de l'oxyde de plutonium et l'oxyde d'un actinide mineur présent dans la poudre coprécipitée.

Que ce soit pour la première variante ou pour la seconde variante, les poudres issues des opérations de tamisage (en l'occurrence les poudres comprenant de l'octaoxyde de triuranium U₃O₈), présentant une taille de grains inférieure à 100 µm (c'est-à-dire la poudre qui passe à travers un tamis présentant des mailles carrées de 100 µm de côté) peuvent être récupérées et soumises aux opérations successives suivantes :
- une opération de pressage à une pression avantageusement supérieure à 300 MPa ;
- une opération de concassage ;
- au moins une opération de tamisage de sorte à isoler la poudre présentant une taille de grains supérieure à 100 µm, de préférence allant de 100 à 250 µm,
lesdites poudres étant destinées à entrer dans la constitution du deuxième mélange de poudres.

Que ce soit pour la première variante ou pour la seconde variante, la teneur en actinide mineur dans le mélange de poudres de l'étape a) est avantageusement comprise dans la gamme allant jusqu'à 40% en masse par rapport à la masse totale des noyaux lourds (à savoir, U, Pu, Actinide(s) mineur(s)).

Dans les cas susmentionnés, les étapes de mélanges peuvent être réalisées dans un mélangeur énergétique, tel qu'un mélangeur doux, par exemple de type Turbula à mouvement oscillo-rotatif ou un mélangeur à oscillation sans bille de broyage.

Les étapes de broyage peuvent être réalisées dans tout type de broyeur comme, par exemple, un broyeur à boulets, à attrition, à oscillation, à mouvement planétaire ou un broyeur à jet de gaz.

Les étapes de tamisage peuvent être réalisées au moyen d'un ou plusieurs tamis, par exemple un tamis en acier inoxydable, permettant d'isoler la poudre présentant une taille de grains supérieure à 100 µm, de préférence une taille de grains allant de 100 à 250 µm.

Les étapes de pressage peuvent être réalisées au moyen d'une presse, par exemple hydraulique.

Le procédé de l'invention comprend ensuite une étape de compactage du mélange susmentionné a) par pressage, pour conférer au mélange une forme de pastille, qui sera la forme des pastilles de combustible nucléaire. Cette étape de pressage peut être réalisée à une pression P2 égale, inférieure ou supérieure à la pression P1 susmentionnée.

Les pastilles résultantes sont soumises à une étape de réduction au cours de laquelle tout ou partie de l'octaoxyde de triuranium U₃O₃ est réduite en oxyde d'uranium UO₂, créant ainsi de façon concomitante des pores résultant de l'espace vacant laissé par la réduction susmentionnée.

L'étape de réduction peut être réalisée en soumettant les pastilles susmentionnées à un courant de gaz réducteur, par exemple de l'hydrogène, éventuellement en mélange avec un gaz neutre, tel que l'argon à une température allant de 600 à 1000°C pendant une durée pouvant aller de 1 à 10 heures.

Ainsi, il peut s'agir d'un mélange argon et hydrogène, l'hydrogène étant compris dans le mélange à une teneur pouvant aller jusqu'à 5% en volume et comprenant éventuellement de l'eau à une teneur pouvant aller jusqu'à 20000 ppm.

Cette étape de réduction comme mentionnée déjà ci-dessus génère une réduction de U₃O₈ en UO₂ et ainsi une réduction de volume. Avantageusement, l'on pourra déterminer la quantité de U₃O₈ à introduire de sorte qu'après réduction, la porosité subséquente génère des pores interconnectés. Pour ce faire, il faut se trouver au-dessus du seuil de percolation de celle-ci et tenir compte de ce fait de la diminution de volume induite par la réduction de U₃O₈.

L'étape de réduction peut être suivie d'une étape de frittage de sorte à consolider entre eux les grains constitutifs des pastilles.

L'étape de frittage peut consister à chauffer les pastilles susmentionnées, par exemple, à une température allant de 1000 à 1800°C, pendant une durée pouvant s'échelonner de 1 à 8 heures, par exemple, sous une atmosphère de gaz neutre, tel que l'argon, éventuellement en présence d'hydrogène et d'eau ou encore sous un milieu réducteur comprenant de l'hydrogène et éventuellement un gaz neutre, tel que l'argon, l'hydrogène étant compris dans le mélange à une teneur pouvant aller jusqu'à 5% en volume et comprenant éventuellement de l'eau à une teneur pouvant aller jusqu'à 20000 ppm.

Après l'étape de frittage, les pastilles obtenues peuvent être soumises à une étape de rectification, laquelle peut être effectuée sur une rectifieuse sans centre et à sec, afin d'obtenir des pastilles satisfaisant à la spécification de diamètre.

Le combustible obtenu par le procédé conforme à l'invention présente les caractéristiques suivantes :
- du combustible présentant une porosité contrôlée facilement réalisable en jouant sur la quantité introduite d'octaoxyde de triuranium U₃O₈ et sur sa granulométrie ;
- du combustible dont la porosité reste stable sous irradiation;
- du combustible ne présentant pas de risque de dégradation des agents porogènes organiques, tel que cela est le cas avec les combustibles comportant un agent porogène organique ;
- du combustible pouvant être stocké sur une longue durée.

L'invention va maintenant être décrite par rapport aux exemples donnés ci-dessous à titre illustratif et non limitatif.

### BRÈVE DESCRIPTION DES DESSINS

La figure 1 est un diagramme de cycle thermique appliqué dans le cadre de l'exemple comparatif 1 et l'exemple 1 de l'invention représentant l'évolution de la température T(en °C) en fonction du temps t(en heures h).
La figure 2 représente une vue prise par microscopie optique (agrandissement *2,5) pour le matériau obtenu selon l'exemple comparatif 1.
La figure 3 représente une vue prise par microscopie optique (agrandissement *2,5) pour le matériau obtenu selon l'exemple 1 de l'invention.

### EXPOSÉ DÉTAILLÉ DE MODES DE RÉALISATION PARTICULIERS

### EXEMPLE COMPARATIF

Cet exemple illustre la préparation d'un combustible oxyde mixte comprenant à la fois de l'uranium et de l'américium.

Le procédé mis en oeuvre selon cet exemple comprend les étapes suivantes :
- une étape de broyage d'un premier mélange par co-broyage de 10 g d'UO₂/AmO₂ dans un bol en inox comprenant deux billes de broyage dans un broyeur oscillant pendant 30 minutes à 15 Hz ;
- une étape d'ajout de 10 g de UO₂ dans le premier mélange (en respectant le ratio U/U+Am=0,9) dans un bol en inox contenant deux billes de broyage dans un broyeur oscillant pendant 30 minutes à 15 Hz ;
- une étape de stockage du mélange UO₂/AmO₂ en conteneur inox, ce mélange résultant de l'ajout des 10 g de UO₂ ;
- une étape de pressage du mélange résultant UO₂/AmO₂ à une pression P1 de 400 MPa au moyen d'une matrice tri-coquille avec lubrification de la matrice et des pistons (avec de l'acide stéarique);
- une étape de réduction sous Ar/H₂ à 1000°C pendant 1 heure;
- une étape de frittage naturel sous argon hydrogéné à 4% à 1750°C pendant 4 heures.

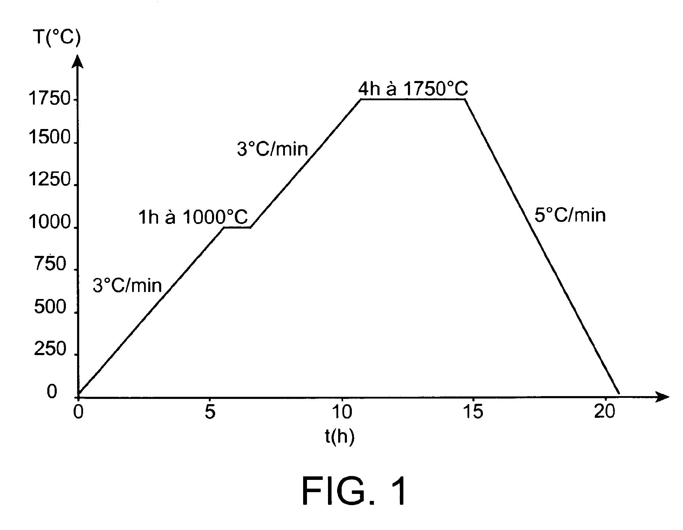

Le cycle thermique réduction/frittage est représenté, de façon plus explicite, sur la figure 1 représentant l'évolution de la température en fonction du temps (en heures).

On obtient, à l'issue de cet exemple, une pastille de formule U_{0,9}Am_{0,1}O₂₋ₓ présentant une porosité de l'ordre de 5% environ (il s'agit d'une densité géométrique) et présentant un taux de porosité ouverte très inférieur à 5% déterminée par pesée hydrostatique.

La pastille obtenue a été analysée par microscopie optique et par diffraction aux rayons X.

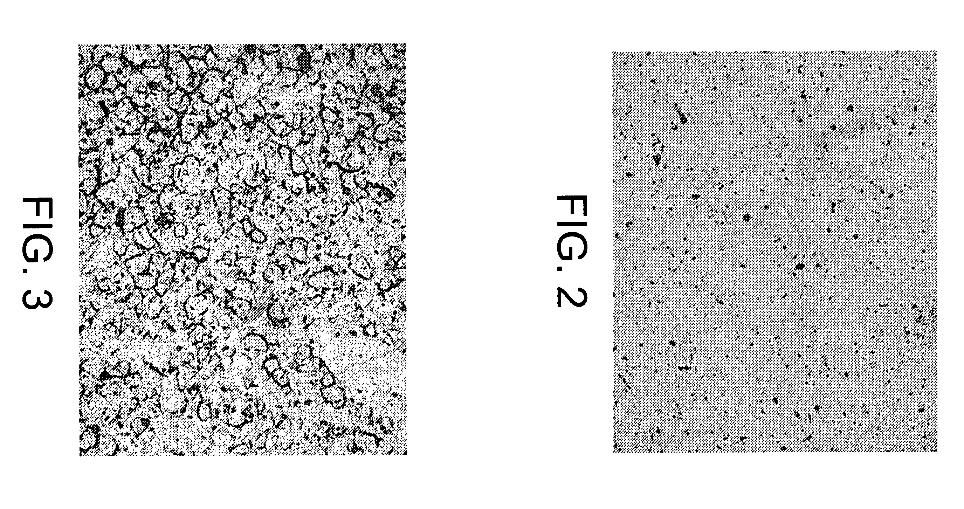

Un cliché obtenu par microscopie optique est représenté sur la figure 2.

On observe sur ce cliché que le matériau présente un très faible niveau de porosité.

La densité géométrique du matériau est estimée à une valeur de 95% (densité géométrique obtenue par pesée et au moyen d'un profilomètre laser).

La perte de masse du matériau après le traitement thermique est estimée à 3,5%.

### EXEMPLE 1 DE L'INVENTION

Cet exemple illustre la préparation d'un combustible oxyde mixte comprenant à la fois de l'uranium et de l'américium conforme au procédé de l'invention.

Le procédé mis en oeuvre selon cet exemple comprend les étapes suivantes :
- une étape de préparation d'un premier mélange par co-broyage de 10 g UO₂/AmO₂ (selon un ratio U/U+Am=0,9) dans un bol en inox comprenant deux billes de broyage dans un broyeur oscillant pendant 30 minutes à 15 Hz ;
- une étape de préparation d'un deuxième mélange U₃O₈/AmO₂ d'une masse de 10 g en respectant le ratio U/U+Am=0,9 dans un bol en inox contenant deux billes de broyage dans un broyeur oscillant pendant 30 minutes à 15 Hz. U₃O₈ est introduit à hauteur de 40% en masse par rapport à la masse du mélange final;
- une étape de stockage du premier mélange UO₂/AmO₂ en conteneur inox ;
- en parallèle, une étape de pressage du deuxième mélange U₃O₈/AmO₂ à une pression P1 de 400 MPa au moyen d'une matrice tri-coquille avec lubrification de la matrice et des pistons (avec de l'acide stéarique);
- une étape de concassage des pastilles issues du pressage du mélange U₃O₈/AmO₂ ;
- une étape de tamisage du mélange U₃O₈/AmO₂, de sorte à isoler la fraction granulométrique présentant une taille de grains allant de 100 à 250 µm, lesdits grains constitutifs de ladite fraction comprenant au sein de chaque grain l'association U₃O₈/AmO₂ ;
- une étape de mélange (sans moyens de broyage dans un broyeur oscillant à 15 Hz pendant 30 minutes) du premier mélange UO₂/AmO₂ et d'un prélèvement du second mélange U₃O₈/AmO₂ ainsi tamisé, de façon à garantir 40% en masse de U₃O₈ dans le mélange final ;
- une étape de pressage du mélange résultant à une pression P2 de 400 MPa;
- une étape de réduction sous Ar/H₂ à 1000°C pendant 1 heure de sorte à réduire U₃O₈ en UO₂;
- une étape de frittage naturel sous argon hydrogéné à 4% à 1750°C pendant 4 heures.

Le cycle thermique réduction/frittage est représenté, de façon plus explicite, sur la figure 1 représentant l'évolution de la température en fonction du temps (en heures).

On obtient, à l'issue de cet exemple, une pastille de formule U_{0,9}Am_{0,1}O₂₋ₓ présentant une porosité de l'ordre de 14% environ (il s'agit d'une densité géométrique) et présentant 10% de porosité ouverte déterminée par pesée hydrostatique.

La pastille obtenue a été analysée par microscopie optique et par diffraction aux rayons X.

Un cliché obtenu par microscopie optique est représenté sur la figure 3.

On observe sur ce cliché que la porosité du matériau obtenu présente une morphologie allongée du type lenticulaire et qu'elle est majoritairement interconnectée.

La densité géométrique du matériau est estimée à une valeur de 86% (densité géométrique obtenu par pesée et au moyen d'un profilomètre laser).

La perte de masse du matériau après le traitement thermique est estimée à 5%.

Par analyse aux rayons X, on peut observer une disparition de la phase U₃O₈ après traitement thermique (ce qui traduit la réduction complète de U₃O₈ en UO₂). En outre, le rapport O/Am de l'oxyde d'américium se situe dans la fourchette 1,5<O/Am<2, car aucun pic de Am₂O₃ ou de AmO₂ n'a été observé. Ceci traduit aussi le fait que le matériau est un matériau monophasé (ce qui signifie que l'américium et l'uranium sont mélangés à l'échelle atomique).

## Revendications

1. Procédé de fabrication d'un combustible poreux comprenant de l'uranium, éventuellement du plutonium, et au moins un actinide mineur comprenant successivement les étapes suivantes :
a) une étape de compactage sous forme de pastilles d'un mélange de poudres comprenant de l'oxyde d'uranium, éventuellement de l'oxyde de plutonium, et au moins un oxyde d'un actinide mineur, une partie au moins de l'oxyde d'uranium étant sous forme d'octaoxyde de triuranium U₃O₈, l'autre partie étant sous forme de dioxyde d'uranium UO₂ ;
b) une étape de réduction d'au moins une partie de l'octaoxyde de triuranium U₃O₈ en dioxyde d'uranium UO₂.

2. Procédé de fabrication selon la revendication 1, dans lequel l'oxyde d'un actinide mineur est choisi parmi un oxyde d'américium, un oxyde de curium, un oxyde de neptunium et des mélanges de ceux-ci.

3. Procédé de fabrication selon l'une quelconque des revendications précédentes, dans lequel l'oxyde d'uranium sous forme d'octaoxyde de triuranium U₃O₈ est associé au sein des mêmes grains avec un oxyde d'un actinide mineur et éventuellement de l'oxyde de plutonium, lesdits grains présentant une taille de grains supérieure à 100 µm, de préférence allant de 100 à 250 µm.

4. Procédé selon l'une quelconque des revendications précédentes, comprenant, en outre, avant l'étape de compactage a), une étape de préparation dudit mélange de poudres tel que défini à l'étape a).

5. Procédé selon la revendication 4, dans lequel l'étape de préparation du mélange de poudres consiste à mettre en contact un premier mélange comprenant une poudre d'oxyde d'uranium sous forme de dioxyde d'uranium UO₂, éventuellement une poudre d'oxyde de plutonium, et au moins une poudre d'un oxyde d'un actinide mineur et un deuxième mélange de poudres comprenant de l'oxyde d'uranium sous forme d'octaoxyde de triuranium U₃O₈, éventuellement de l'oxyde de plutonium et un oxyde d'un actinide mineur.

6. Procédé selon la revendication 5, dans lequel le deuxième mélange de poudres se présente sous forme de grains comprenant l'association au sein d'un même grain de l'oxyde d'uranium sous forme d'octaoxyde de triuranium U₃O₈, éventuellement de l'oxyde de plutonium, et d'un oxyde d'un actinide mineur, lesdits grains présentant une taille de grains supérieure à 100 µm, de préférence allant de 100 à 250 µm.

7. Procédé selon la revendication 5, dans lequel le premier mélange est issu des opérations suivantes :
- une opération de mise en contact d'une poudre d'oxyde d'uranium sous forme de dioxyde d'uranium UO₂, éventuellement d'une poudre d'oxyde de plutonium, et d'au moins une poudre d'un oxyde d'actinide mineur ; et
- éventuellement une opération de co-broyage du mélange résultant pour obtenir un mélange intime de poudres.

8. Procédé selon la revendication 6, dans lequel le deuxième mélange de poudres est issu des opérations suivantes :
- une opération de mise en contact d'une poudre d'oxyde d'uranium sous forme d'octaoxyde de triuranium U₃O₈, éventuellement d'une poudre d'oxyde de plutonium, et d'au moins une poudre d'oxyde d'un actinide mineur ;
- une opération de co-broyage desdites poudres ;
- une opération de pressage à une pression P1 prédéterminée ;
- une opération de concassage ; et
- au moins une opération de tamisage de sorte à isoler les grains présentant une taille de grains supérieure à 100 µm, de préférence allant de 100 à 250 µm.

9. Procédé selon la revendication 4, dans lequel l'étape de préparation du mélange de poudres consiste à mettre en contact une première poudre coprécipitée d'oxyde d'uranium, éventuellement de plutonium, et d'un actinide mineur avec un deuxième mélange de poudres comprenant de l'oxyde d'uranium sous forme d'octaoxyde de triuranium U₃O₈, éventuellement de l'oxyde de plutonium et au moins un oxyde d'un actinide mineur.

10. Procédé selon la revendication 9, dans lequel le deuxième mélange de poudres est obtenu à partir d'une fraction de la première poudre coprécipitée, laquelle fraction est soumise à une étape de calcination sous air, de sorte à transformer l'oxyde d'uranium UO₂ en octaoxyde de triuranium U₃O₈, le produit résultant étant ensuite éventuellement soumis à une opération de pressage, suivie d'une opération de concassage et d'une opération de tamisage de sorte à isoler les poudres présentant une taille de grains supérieure à 100 µm, de préférence allant de 100 à 250 µm.

11. Procédé selon la revendication 8 ou 10, dans lequel les poudres issues des opérations de tamisage présentant une taille de grains inférieure à 100 µm sont récupérées et soumises aux opérations successives suivantes :
- une opération de pressage à une pression avantageusement supérieure à 300 MPa ;
- une opération de concassage ;
- au moins une opération de tamisage de sorte à isoler la poudre présentant une taille de grains supérieure à 100 µm, de préférence allant de 100 à 250 µm,
lesdites poudres étant destinées à entrer dans la constitution du deuxième mélange de poudres.

12. Procédé selon l'une quelconque des revendications précédentes, dans lequel l'étape de réduction b) est mise en oeuvre par passage d'un courant de gaz réducteur à une température allant de 600 à 1000°C pendant une durée pouvant aller de 1 à 10 heures.

13. Procédé selon l'une quelconque des revendications précédentes, comprenant en outre, après l'étape de réduction b), une étape de frittage des pastilles de combustible.

14. Procédé selon la revendication 13, dans lequel l'étape de frittage est mise en oeuvre par chauffage des pastilles susmentionnées à une température allant de 1000 à 1800°C, pendant une durée pouvant s'échelonner de 1 à 8 heures.

15. Procédé selon la revendication 14, dans lequel l'étape de frittage est réalisée en atmosphère de gaz neutre, éventuellement en présence d'hydrogène et d'eau.

## Patentansprüche

1. Verfahren zur Verstellung eines porösen Brennstoffes, der Uran, eventuell Plutonium, und mindestens ein weniger häufiges Actinoid aufweiset, wobei es aufeinanderfolgend die folgenden Schritte umfasst:
a) einen Schritt einer Verdichtung in Form von Tabletten einer Mischung von Pulvern, aufweisend Uranoxid, eventuell Plutoniumoxid, und mindestens ein Oxid eines weniger häufigen Actinoids, wobei zumindest ein Teil des Uranoxids in Form von Triuranoctoxid U₃O₈ vorliegt, und der andere Teil in Form von Urandioxid UO₂ vorliegt;
b) einen Schritt zur Reduktion mindestens eines Teils des Triuranoctoxids U₃O₈ zu Urandioxid UO₂.

2. Verfahren zur Herstellung nach Anspruch 1, bei dem das Oxid eines weniger häufigen Actinoids gewählt ist aus einem Americiumoxid, einem Curiumoxid, einem Neptuniumoxid und Mischungen von diesen.

3. Verfahren zur Herstellung nach einem der vorhergehenden Anspruche, bei dem das Uranoxid in Form von Triuranoctoxid U₃O₈ innerhalb derselben Körner mit einem Oxid eines weniger häufigen Actinoids und eventuell Plutoniumoxid gepaart ist, wobei die Körner eine Korngröße oberhalb 100 µm, vorzugsweise wischen 100 und 250 µm, aufweisen.

4. Verfahren nach einem der vorhergehenden Ansprüche, das weiter, vor dem Schritt zur Verdichtung a), einen Schritt zur Vorbereitung der Mischung von Pulvern wie definiert in Schritt a) umfasst.

5. Verfahren nach Anspruch 4, bei dem der Schritt zur Vorbereitung der Mischung von Pulvern darin besteht, eine erste Mischung, die ein Pulver von Uranoxid in Form von Urandioxid UO₂, eventuell ein Pulver von Plutoniumoxid, und mindestens ein Pulver eines Oxids eines weniger häufigen Actinoids aufweiset, und eine zweite Mischung von Pulvern in Kontakt zu bringen, die Uranoxid in Form von Triuranoctoxid U₃O₈, eventuell Plutoniumoxid und ein Oxid eines weniger häufigen Actinoids aufweist.

6. Verfahren nach Anspruch 5, bei dem die zweite Mischung von Pulver in Form von Körner vorliegt, die eine Verpaarung, im Inneren eines selben Korns, von Uranoxid in Form von Triuranoctoxid U₃O₈, eventuell von Plutoniumoxid, und eines Oxids eines weniger häufigen Actinoids aufweisen, wobei die Körner eine Kerngröße oberhalb 100 µm, vorzugsweise zwischen 100 und 250 µm aufweisen.

7. Verfahren nach Anspruch 5, bei dem die erste Mischung aus den folgenden Operationen hervorgegangen ist:
- eine Operation zum In-Kontakt-Bringen eines Pulvers von Uranoxid in Form von Urandioxid UO₂, eventuell eines Pulvers von Plutoniumoxid, und mindestens eines Pulvers eines Oxides eines weniger häufigen Actinoids; und
- eventuell eine Operation eines gemeinsamen Vermahlens der entstehenden Mischung, und eine innige Mischung von Pulvern zu erhalten.

8. Verfahren nach Anspruch 6, bei dem die zweite Mischung von Pulvern aus den folgenden Operationen hervorgegangen ist:
- eine Operation zum In-Kontakt-Bringen eines Pulvers von Uranoxid in Form von Triuranoctoxid U₃O₈, eventuell eines Pulvers von Plutoniumoxid, und mindestens eines Pulvers eines Oxids eines weniger häufigen Actinoids;
- eine Operation eines gemeinsamen Vermahlens der Pulver;
- eine Operation eines Pressens mit einem vorbestimmten Druck P1;
- eine Operation eines grob Zerkleinerns; und
- mindestens eine Operation eines Siebens, so dass die Körner isoliert werden, die eine Korngröße oberhalb 100 µm, und vorzugsweise zwischen 100 und 250 µm aufweisen.

9. Verfahren nach Anspruch 4, bei dem der Schritt zur Vorbereitung der Mischung von Pulvern darin besteht, ein erstes gemeinsam ausgefälltes Pulver von Uranoxid, eventuell Plutoniumoxid, und einem weniger häufigen Actinoid, mit einer zweite Mischung von Pulvern in Kontakt zu bringen, die Uranoxid in Form von Triuranoctoxid U₃O₈, eventuell Plutoniumoxid und mindestens ein Oxid eines weniger häufigen Actinoids aufweiset.

10. Verfahren nach Anspruch 9, bei dem die zweite Mischung von Pulvern ausgehend von einer Fraktion des ersten gemeinsam ausgefällten Pulvers erhalten wird, wobei die Fraktion einem Schritt zur Kalzinierung unter Luft unterwerfen wird, so dass das Uranoxid UO₂ in Triuranoctoxid U₃O₈ umgewandelt wird, wobei das resultierende Produkt dann eventuell einer Pressoperation unverzogen wird, gefolgt von einer Grobzerkleinerungsoperation und einer Siebungsoperation, so dass die Pulver isoliert werden, die eine Kerngröße oberhalb 100 µm, vorzugsweise zwischen 100 und 250 µm, aufweisen.

11. Verfahren nach Anspruch 8 oder 10, bei dem die Pulver, die aus den Siebungsoperationen hervorgehen und die eine Korngröße unterhalb 100 µm aufweisen, wiedergewinnen werden und den folgenden aufeinanderfolgenden Operationen unterzogen werden:
- einer Pressoperation mit einem Druck, der vorteilhaft oberhalb 300 MPa liegt;
- einer Grobzerkleinerungsoperation;
- mindestens einer Siebungsoperation, so dass das Pulver isoliert wird, das eine Korngröße oberhalb 100 µm, vorzugsweise zwischen 100 und 250 µm aufweiset,
wobei die Pulver bestimmt sind, in die Zusammensetzung der zweiten Mischung von Pulvern einzutreten.

12. Verfahren nach einem der vorhergehenden Anspruche, bei dem der Schrift einer Reduktion b) dadurch durchgeführt wird, dass ein reduzierender Gasstrom mit einer Temperatur zwischen 600 und 1000 °C während einer Dauer durchgeleitet wird, die wischen 1 und 10 Stunden betragen kann.

13. Verfahren nach einem der vorhergehenden Anspruche, das weiter, nach dem Schritt zur Reduktion b), einen Schritt eines Sinterns der Brennstofltabletten aufweist.

14. Verfahren nach Anspruch 13, bei dem der Schritt des Sinterns dadurch durchgeführt wird, dass diese Tabletten auf eine Temperatur wischen 1000 und 1800 °C erwärmt werden, und zwar für eine Dauer, die sich über 1 bis 8 Stunden erstrecken kann.

15. Verfahren nach Anspruch 14, bei dem der Schritt des Sinterns in einer Atmosphäre eines neutralen Gases erfolgt, eventuell bei Vorhandensein von Wasserstoff und Wasser.

## Claims

1. A method for manufacturing a porous fuel comprising uranium, optionally plutonium and at least one minor actinide successively comprising the following steps :
a) a step for compacting as pellets a mixture of powders comprising uranium oxide, optionally plutonium oxide and at least one oxide of a minor actinide, at least one portion of the uranium oxide being in the form of triuranium octaoxide U₃O₈, the other portion being in the form of uranium dioxide UO₂;
b) a step for reducing at least one portion of the triuranium octaoxyde U₃O₈ into uranium dioxide UO₂.

2. The manufacturing method according to claim 1, wherein the oxide of a minor actinide is selected from an americium oxide, a curium oxide, a neptunium oxide and mixtures thereof.

3. The manufacturing method according to any of the preceding claims, wherein the uranium oxide in the form of triuranium octaoxyde U₃O₈ is associated within the same grains with an oxide of a minor actinide and optionally with plutonium oxide, said grains having a grain size of more than 100 µm, preferably ranging from 100 to 250 µm.

4. The method according to any of the preceding claims, further comprising before the compacting step a), a step for preparing said mixture of powders as defined in step a).

5. The method according to claim 4, wherein the step for preparing the mixture of powders consists of putting into contact a first mixture comprising a powder of uranium oxide in the form of uranium dioxide UO₂. optionally a powder of plutonium oxide, and at least one powder of an oxide of a minor actinide and a second mixture of powders comprising uranium oxide in the form of triuranium octaoxyde U₃O₈, optionally plutonium oxide and an oxide of a minor actinide.

6. The method according to claim 5, wherein the second mixture of powders appears as grains comprising the association within a same grain of uranium oxide in the form of triuranium octaoxyde U₃O₈, of optionally plutonium oxide, and of an oxide of a minor actinide, said grains having a grain size of more than 100 µm, preferably ranging from 100 to 250 µm.

7. The method according to claim 5, wherein the first mixture stems from the following operations:
- an operation for putting into contact a powder of uranium oxide in the form of uranium dioxide UO₂, optionally a powder of plutonium oxide, and at least one powder of a minor actinide oxide; et
- optionally an operation for co-milling the resulting mixture in order to obtain an intimate mixture of powders.

8. The method according to claim 6, wherein the second mixture of powders stems from the following operations:
- an operation for putting into contact a powder of uranium oxide in the form of triuranium octaoxyde U₃O₈, optionally a powder of plutonium oxide, and at least one powder of an oxide of a minor actinide;
- an operation for co-milling said powders;
- a pressing operation at a predetermined pressure P1;
- a crushing operation; and
- at least one sifting operation so as to isolate the grains having a grain size of more than 100 µm, preferably ranging from 100 to 250µm.

9. The method according to claim 4, wherein the step for preparing the mixture of powders consists of putting into contact a first co-precipitated powder of an oxide of uranium optionally plutonium, and of a minor actinide with a second mixture of powders comprising uranium oxide in the form of triuranium octaoxide U₃O₈, optionally plutonium oxide and at least one oxide of a minor actinide.

10. The method according to claim 9, wherein the second mixture of powders is obtained from a fraction of the first co-precipitated powder, said fraction is subject to a calcination step in air so as to transform the uranium oxide UO₂ into triuranium octaoxyde U₃O₈, the resulting product being then optionally subject to a pressing operation, followed by a crushing operation and a sifting operation so as to isolate the powders having a grain size of more than 100 µm, preferably ranging from 100 to 250 µm.

11. The method according to claim 8 or 10, wherein the powders stemming from the sifting operations having a grain size of less than 100 µm are recovered and subject to the following successive operations:
- a pressing operation at a pressure advantageously greater than 300 MPa;
- a crushing operation;
- at least one sifting operation so as to isolate the powder having a grain size of more than 100 µm, preferably ranging from 100 to 250 µm,
said powders being intended to enter the composition of the second mixture of powders.

12. The method according to any of the preceding claims, wherein the reduction step b) is applied by having a reducing gas stream pass at a temperature ranging from 600 to 1,000°C for a period which may range from 1 to 10 hours.

13. The method according to any of the preceding claims, further comprising after the reduction step b), a step for sintering fuel pellets.

14. The method according to claim 13, wherein the sintering step is applied by heating the aforementioned pellets to a temperature ranging from 1,000 to 1,800°C, for a period which may range from 1 to 8 hours.

15. The method according to claim 14, wherein the sintering step is carried out in a neutral gas atmosphere, optionally in the presence of hydrogen and water.
